# EUROPÄISCHE PATENTSCHRIFT

(11) **EP 0 825 236 B1**
(45) Veröffentlichungstag und Bekanntmachung des Hinweises auf die Patenterteilung: **07.08.2002**
(21) Anmeldenummer: 97113458.0
(22) Anmeldetag: 05.08.1997
(51) Int. Cl.: C09C 3/04, C04B 14/02, C09D 7/12

(54) **Verfahren zur Herstellung von anorganischen Granulaten**
Process for preparing inorganic granules
Procédé de préparation de granulés inorganiques

(30) Priorität: 16.08.1996 DE 19632928
(43) Veröffentlichungstag der Anmeldung: 25.02.1998
(73) Patentinhaber: BAYER AG, 51368 Leverkusen (DE)
(72) Erfinder: Linde, Günter, Dr., 47800 Krefeld (DE); Steiling, Lothar, Dr., 51373 Leverkusen (DE)

(56) Entgegenhaltungen:
- EP-A- 0 518 152
- DE-A- 3 232 635
- DE-A- 3 619 363
- DE-A- 4 223 598
- DE-C- 4 336 613

## Beschreibung

Die vorliegende Erfindung betrifft ein Verfahren zur Herstellung von anorganischen Granulaten. Die erfindungsgemäß hergestellten Granulate werden zur Einfärbung von Baustoffen, insbesondere Beton, Asphalt, Putze und Mörtel und zur Herstellung von Slurries und Anstrichfarben für den Bautenschutz verwendet.

Zement- und kalkgebundene Baustoffe wie Putze, Kalksandstein, Faserzementteile und Betonwerksteine, insbesondere Dach- und Pflastersteine sowie Gehwegplatten, werden in der Regel, wenn sie farbig gestaltet werden sollen, mit anorganischen Pigmenten eingefärbt. So ist es allgemein in der Baustoffindustrie üblich, Eisenoxide oder Eisenoxidhydroxide als Rot-, Schwarz-, Braun- oder Gelbpigmente, Manganoxide als Braunschwarzpigmente, Chromoxide als Grünpigmente und Titandioxide als Weißpigmente einzusetzen. Als weitere Beispiele können Ruße als Schwarzpigmente, Nickel- oder Chromrutile als Gelbpigmente und kobalthaltige Spinelle als Blau- und Grünpigmente, kupferhaltige Spinelle als Schwarzpigmente sowie Mischkristalle aus Bariumsulfat und Bariummanganat als Blaupigmente eingesetzt werden.

Zur Einfärbung von Baustoffen werden normalerweise die Pigmente im pulverförmigen Zustand eingesetzt. Sie haben in gemahlener Form den Vorteil der guten Dispergierbarkeit. Die vollständig homogene Verteilung solcher Pigmentpulver muß z.B. bei Beton in kurzer Zeit erfolgen. Der Nachteil dieser feinen Pulver besteht darin, daß sie kein gutes Fließverhalten aufweisen und beim Lagern häufig zusammenbacken und verklumpen. Die genaue Dosierung wird hierdurch erschwert. Ein weiterer Nachteil der Pulver besteht darin, daß sie zum Stauben neigen.

Es ist bekannt, daß diese Nachteile bei der Pigmentierung von Betonteilen vermieden werden können, indem man anstelle trockener Pigmentpulver wäßrige Pigmentsuspensionen einsetzt. Die Verwendung derartiger 30 bis 70 Gew.-% Pigment enthaltender Pasten oder Schlicker hat sich nur zögernd durchsetzen können. Durch den zusätzlichen Wassergehalt können nämlich je nach Entfernung von Herstell- und Einsatzort erheblich höhere Transportkosten auftreten. Auch kann die mitgelieferte große Wassermenge nicht in jeder Betonzubereitung verarbeitet werden.

Die Baustoffindustrie ist deshalb größtenteils beim Einsatz trockener Pigmentpulver geblieben. Der Verwendung von Pigmenten in Form von Mikrogranulaten stand bisher die Meinung entgegen, Granulate seien in Betonzubereitungen weniger gut dispergierbar. Schwer dispergierbare Pigmentagglomerate oder -granulate erfordern wesentlich längere Mischzeiten. Bei normalen, in der Baustoffindustrie üblichen kurzen Mischzeiten treten infolge schlechter Pigmentverteilung an der Betonoberfläche Stippen, Streifen oder Farbnester auf. Die im Pigment erhaltene Farbstärke kann sich außerdem nicht entfalten, so daß bei gleicher Farbintensität des Betonwerkstückes größere Pigmentierungen aufgewendet werden müssen.

In DE-C-3 619 363 werden für die Einfärbung von Betonwaren Pigmentgranulate beschrieben, die im wesentlichen aus Pigment und einem oder mehreren, die Dispergierung des Pigments in Beton fördernden Bindemittel(n) bestehen. Als Bindemittel, die in Beton als Dispergierhilfsmittel wirken, werden genannt: Alkylbenzolsulfonat, Alkylnaphthalinsulfonat, Ligninsulfonat, sulfatierte Polyglykolether, Melaminformaldehydkondennsate, Naphthalinformaldehydkondensate, Glukonsäure, Salze von niedrigmolekularen, teilveresterten Styrol-Maleinsäureanhydrid-Copolymerisaten und Copolymere aus Vinylacetat und Krotonsäure. Der Anteil im Pigment soll bevorzugt 2 bis 6 Gew.-% betragen.

In DE-C-4 119 667 wird ein Verfahren beschrieben, bei dem Pigmentgranulate durch Sprühtrocknen unter Verwendung von löslichen Salzen der ersten beiden Hauptgruppen des Periodensystems hergestellt werden. Dieses Verfahren läßt sich auch auf die Granulierung von wäßrigen Suspensionen bzw. Pasten anwenden. In einigen Fällen führen Zusätze, beispielsweise Bindemittelzusätze, aber zu einer Erhöhung der Viskosität, die durch Zusatz von Wasser ausgeglichen werden muß. Dabei wird aber die Wirtschaftlichkeit der Sprühgranulation verringert, weil, bezogen auf Feststoff, mehr Wasser verdampft werden muß.

In US 5 401 313 wird die Herstellung von Pigmenten als Pulver und als Granulat aus wäßrigen Suspensionen durch Sprühtrocknung mit elektrochemischer und chemischer Oberflächenmodifizierung in zwei Stufen beschrieben. Dieses Verfahren arbeitet wegen des Fällungsschrittes nur in sehr verdünnten Pigmentkonzentrationen von weniger als 10 % Feststoff. Das bedeutet, daß hohe Energiekosten für die Sprühtrocknung aufgewendet werden müssen.

Der Einsatz von Phosphaten oder Ligninsulfonaten - wie er z.T. in den oben zitierten Druckschriften beschrieben wird - führt insbesondere in höherer Konzentration bei der Anwendung in Beton zu teilweise unerwünschten Effekten, beispielsweise zu einer Verlängerung der Abbindezeiten des Betons. Auch Silikate sind trotz ihrer dispergierstabilisierenden Eigenschaften aufgrund hoher Ladungsdichte wegen der Bildung von schwerlöslichen Verbindungen (durch Carbonisierung) im Laufe der Zeit nicht immer geeignet. Dadurch wird die Dispergierzeit für eine gleichmäßige Einfärbung erhöht. In einigen Fällen wird durch die Zugabe anorganischer Bindemittel die Viskosität der Suspension vor der Versprühung erhöht. Dann muß die Fließfähigkeit durch entsprechende Verdünnung wieder hergestellt werden. Wegen der erhöhten Wasserverdampfung steigen dadurch aber die Trocknungskosten.

Aufgabe der vorliegenden Erfindung war es, ein Verfahren zur Verfügung zu stellen, das es gestattet, Pigmentgranulate herzustellen, die die oben aufgeführten Nachteile nicht aufweisen.

Diese Aufgabe konnte dadurch gelöst werden, daß neben bekannten Bindemitteln zusätzlich organische oder metallorganische Verbindungen zur Verflüssigung eingesetzt wurden.

Gegenstand der Erfindung ist ein Verfahren zur Herstellung von anorganischen Pigmentgranulaten und anorganischen Füllstoffgranulaten, die aus einem oder mehreren Pigmenten oder Füllstoffen und einem oder mehreren anorganischen Bindemitteln bestehen und einen Wassergehalt von nicht mehr als 5 Gew.-% aufweisen und deren Teilchendurchmesser zwischen 100 um und 2 mm liegt, welches dadurch gekennzeichnet ist, daß zu einer wäßrigen Pigment- oder Füllstoffsuspension ein Salz als Bindemittel und zusätzlich ein organisches oder metallorganisches Verflüssigungsmittel zugefügt werden und anschließend diese Suspension zu Granulaten aufgearbeitet wird, wobei das organische Verflüssigungsmittel bzw. der organische Anteil im metallorganischen Verflüssigungsmittel thermisch zersetzt wird, ohne daß organische Reste im Granulat zurückbleiben. Entsprechend dem erfindungsgemäßen Verfahren werden das Bindemittel sowie die zusätzliche Verbindung bevorzugt zur wäßrigen Suspension des Pulvers zugegeben. Die zusätzliche organische Verbindung bzw. deren organischer Teil wird während des Granuliervorganges thermisch zersetzt oder im Anschluß an den Granuliervorgang während einer gegebenenfalls durchzuführenden Trocknung oder Temperung zersetzt.

Der Granuliervorgang erfolgt beispielsweise durch Sprühgranulation in Sprühtrocknern mit Düsen- oder Zerstäuberscheiben. Er kann aber auch durch Aufbaugranulation (Teller- oder Trommelgranulation) von bevorzugt teilweise getrocknetem Material, durch Mischeragglomerisation oder Wirbelschichtgranulation sowie durch Kombination mehrerer Verfahren erfolgen. Die Granulierung kann auch durch Pastenverformung mit Nachtrocknung und anschließender Zerkleinerung erfolgen.

Als Apparate sind alle handelsüblichen Granulierapparate einsetzbar.

Eine gegebenenfalls zusätzlich durchzuführende Temperung kann beispielsweise in herkömmlichen Anlagen, wie z.B. Drehrohr, Durchlaufofen oder Wirbelbett unter inerter, oxidierender oder reduzierender Atmosphäre bei Temperaturen von 120°C bis 550°C, vorzugsweise von 150°C bis 350°C, durchgeführt werden. Das Tempern kann außer bei Normaldruck auch bei Über- oder Unterdruck durchgeführt werden. Bei anorganischen Pigmenten oder Füllstoffen ist auch eine Versprühung bei erhöhten Temperaturen von 500°C bis 1000°C möglich.

Als Bindemittel sind wasserlösliche anorganische Salze, wie z.B. Sulfate, Chloride, Fluoride, Nitrate, Carbonate, Silikate, Phosphate, Sulfite, Selenate, Aluminate, Borate der Alkali- und Erdalkalimetalle und anderer Metalle (z.B. Aluminium und Eisen) sowie von Ammonium geeignet, besonders geeignet ist Magnesiumsulfat. Die Anwendungsmenge, bezogen auf Pigment, liegt zwischen 0,01 und 10 Gew.-%, bevorzugt 0,05 bis 5 Gew.-%, besonders bevorzugt 0,2 bis 4 Gew.-%.

Alle organischen Verbindungen, die niedrige Siedepunkte bis zu 250°C bzw. niedrige Zersetzungspunkte bis zu 350°C aufweisen, mit verflüssigender Wirkung auf anorganische Pigment- oder Füllstoffsuspensionen mit anorganischen Salzen sind als Verflüssiger geeignet.

Als organische Verbindungen oder metallorganische Verbindungen zur Verflüssigung werden insbesondere Ameisensäure, Weinsäure, Zitronensäure, Oxalsäure und deren Salze oder Derivate davon (z.B. Ester, Säurechloride etc.), Alkoholate, Polyacrylate, Sulfonate, Polyasparaginsäure, insbesondere in Form der Ammoniumsalze, Kondensationsprodukte von Formaldehyd mit Aminen in einer Menge von 0,01 bis 10 Gew.-%, vorzugsweise von 0,1 bis 5 Gew.-% eingesetzt. Natriumund Ammoniumsalze o.g. organischer Verbindungen sind besonders bevorzugt.

Als Pigmente werden bevorzugt Eisenoxide, Titandioxide, Chromoxide, Zinkoxid, Rutilmischphasenpigmente, Manganeisenoxide und Ruße eingesetzt.

Als anorganische Füllstoffgranulate werden vorzugsweise anorganische Verbindungen mit geringer Farbkraft, wie z.B. natürliche Eisenoxide, Zinksulfid, Aluminiums oxid, Schwerspat und Kieselerde, Silikate (Talk, Ton, Glimmer), Calciumcarbonat und Calciumsulfat eingesetzt.

Besonders bevorzugt können die hergestellten Granulate noch organisch nachbehandelt werden. Häufig in Abhängigkeit vom späteren Einsatz (z.B. in Kunststoffen, Dispersionsfarben, Lacksystemen) werden bestimmte, bevorzugte organische Verbindungen für die Nachbehandlung ausgewählt. Als Beispiele seien genannt:
für den Einsatz in Kunststoffen:
   Alkohole, Carboxylate, Ester, Silikonverbindungen, Amine, Amide, Polyether, Polyole;
für den Einsatz in Dispersionsfarben:
   Alkohole, Ester, Silikonverbindungen, Amine, Amide, Polyether, Polyole;
für den Einsatz in Lacksystemen:
   Alkohole, Alkoholate, Carboxylate, Ester, Silikonverbindungen, Amine, Amide,
   Polyether, Polyole.

Die erfindungsgemäß hergestellten Granulate werden zur Einfärbung von Baustoffen, wie z.B. Beton, Asphalt und Zementmörtelmischungen, und zur Herstellung von Slurries und Anstrichmitteln für den Bautenschutz verwendet.

Bei der Einfärbung von Beton und Zementmörtel werden die Granulate bevorzugt im Mischer dem Baustoff zugeschlagen, bei der Herstellung der Slurries und Anstrichfarben werden handelsübliche Rühr- oder Mischaggregate verwendet.

In den nachfolgenden Beispielen wird die Erfindung näher erläutert, ohne daß darin eine Einschränkung zu sehen ist.

### Beispiele

### Beispiel 1

Herstellung von Titandioxid-Granulaten aus Bayertitan R-FK-D (Handelsprodukt der BAYER AG) aus einer Suspension mit 50 % Feststoff. Die Suspension hat eine Viskosität von 122 mPa.s; nach Zugabe von 1 % Magnesiumsulfat steigt sie auf 323 mPa.s. Durch Zugabe eines Polyacrylats (3,8 % Polystabil S'312 mit 40 % Wirkstoff - Handelsprodukt der Fa. Stockhausen, Krefeld) fällt sie auf 39 mPa.s. Ebenso fällt die Viskosität der 50 %igen Suspension durch Zugabe von 1 % Oxalsäure auf 98 mPa.s. Nach Versprühung in einem handelsüblichen Sprühtrockner mit 20 kg/h Wasserverdampfung über eine Scheibe bei Eingangs- bzw. Ausgangstemperaturen von 340°C bis 140°C und Nachtempern 12 Stunden bei 300°C wird kein Kohlenstoff aus der Zugabe gefunden. Es werden gut fließbare Granulate mit d₅₀ von 50 µm erhalten, die sich gut in Baustoffe einarbeiten lassen.

### Beispiel 2

Eisenoxidrot Bayferrox 130 (Handelsprodukt der BAYER AG), wird mit 60 % Feststoff auf einem Sprühtrockner der Firma Niro mit 20 kg/h Wasserverdampfung über eine Scheibe mit 12 000 UpM verdüst; die Eingangstemperatur liegt bei 350°C, die Ausgangstemperatur bei 140°C. Die Viskosität der Suspension beträgt 14 mPa.s. Die Granulate sind sehr weich. Bei Zugabe von 1 % Magnesiumsulfat als Bindemittel steigt die Viskosität auf 190 mPa.s. Diese Erhöhung der Viskosität läßt sich durch Zugabe von verflüssigend wirkenden Substanzen wieder senken:

| | |
|---|---|
| 1 % Ameisensäure | ergibt 136 mPa.s |
| 1 % Weinsäure | ergibt 40 mPa.s |
| 1 % Aluminiumtriisopropylat | ergibt 118 mPa.s |

Nach dem Trocknen bzw. einer Nachtemperung von 12 Stunden bei 300°C wird kein aus dem Verflüssiger stammender Kohlenstoff nachgewiesen. Die erhaltenen Granulate zeigen eine relativ gute Stabilität, sind frei fließend und lassen sich genau so gut wie Pulver in Betonsteine einarbeiten.

### Beispiel 3

Chromoxid GN (Handelsprodukt der BAYER AG) weist in 50 %iger Suspension eine Viskosität von 324 mPa.s auf, die durch Zugabe eines Bindemittels wie 1 % Magnesiumsulfat, noch um ca. 10 % erhöht wird. Die Zugabe einer kondensierten organischen Polysäure bzw. eines entsprechenden Salzes, wie z.B. 0,33 % Polyasparaginsäure, senkt die Viskosität deutlich auf 135 mPa.s ab. Nach Versprühung und Temperung von 12 Stunden bei ca. 350°C wird kein Kohlenstoff aus dem Verflüssiger gefunden.

Ebenso wird bei der Verwendung von 1 % Calciumformiat bzw. 0,5 % Polyacrylatzusatz auf Titandioxid nach Temperung kein organisch gebundener Kohlenstoff mehr bestimmt. Alle Granulate lassen sich ebenso gut wie die zugrundeliegenden Pulver in Beton einarbeiten.

### Beispiel 4

Eisenoxidschwarz Bayferrox 330 (Handeslprodukt der BAYER AG) ist bei Verwendung von 3 % Magnesiumsulfat als Bindemittel

| | |
|---|---|
| bei 50 % Feststoff | flüssig, |
| bei 55 % Feststoff | zähflüssig, |
| bei 60 % Feststoff | pastös. |

Durch Zusatz von organischen Verflüssigern wie 2 % Ameisensäure oder 5 % des Natriumsalzes der Polyasparaginsäure, ist eine 55 %ige Suspension mit 3 % Magnesiumsulfat gut zu versprühen.

Bayferrox 330 mit 55 % Feststoff und 3 % Magnesiumsulfat sowie 2 % Ameisensäure wurde auf einem Gleichstromdüsentrockner bei 400°C Eingangstemperatur und 160°C Abgastemperatur durch eine Hohlkegeldüse der Fa. Schlick mit einer Bohrung von 1 mm und 30° Sprühwinkel verdüst. Die entstandenen Granulate hatten eine mittlere Teilchengröße von ca. 200 µm. Das Material ist frei fließend und gut dosierbar. Der Farbeindruck nach Einarbeitung in Beton ist wie bei Pulver. Der Kohlenstoffgehalt im Pulver betrug 1,32 %, er wurde durch Zusatz von Ameisensäure in der Slurry auf 1,84 % erhöht. Im Granulat wurden 1,28 % gefunden. Durch Nachtempern wurde der Kohlenstoffgehalt auf unter 1 % gesenkt; auf 0,8 % bei 400°C und auf 0,47 % bei 550°C (Temperatur bei Nachtemperung).

## Patentansprüche

1. Verfahren zur Herstellung von anorganischen Pigmentgranulaten und anorganischen Füllstoffgranulaten, die aus einem oder mehreren Pigmenten oder Füllstoffen und einem oder mehreren anorganischen Bindemitteln bestehen und einen Wassergehalt von nicht mehr als 5 Gew.-% aufweisen und deren Teilchendurchmesser zwischen 100 µm und 2 mm liegt, **dadurch gekennzeichnet, daß** zu einer wäßrigen Pigment- oder Füllstoffsuspension ein Salz als Bindemittel und zusätzlich ein organisches oder metallorganisches Verflüssigungsmittel zugefügt werden und anschließend diese Suspension zu Granulaten aufgearbeitet wird, wobei das organische Verflüssigungsmittel bzw. der organische Anteil im metallorganischen Verflüssigungsmittel thermisch zersetzt wird, ohne daß organische Reste im Granulat zurückbleiben.

2. Verfahren nach Anspruch 1, **dadurch gekennzeichnet, daß** als Bindemittel anorganische Metallsalze aus der Gruppe bestehend aus Boraten, Carbonaten, Silikaten, Sulfaten, Sulfiten, Selenaten, Chloriden, Fluoriden, Phosphaten, Nitraten und Aluminaten in einer Menge von 0,01 bis 10 Gew.-% eingesetzt werden.

3. Verfahren nach Anspruch 1 oder 2, **dadurch gekennzeichnet, daß** als Verflüssigungsmittel Ameisensäure, Weinsäure, Zitronensäure, Oxalsäure und deren Salze oder Derivate davon, Polyacrylate, Polyasparaginsäure, Sulfonate, Alkoholate, Kondensationsprodukte von Formaldehyd mit Aminen in einer Menge von 0,01 bis 10 Gew.-% eingesetzt werden.

4. Verfahren nach einem oder mehreren der Ansprüche 1 bis 3, **dadurch gekennzeichnet, daß** als Pigmente Eisenoxide, Titandioxide, Chromoxide, Zinkoxid, Rutilmischphasenpigmente, Manganeisenoxide und Ruße eingesetzt werden.

5. Verfahren nach einem oder mehreren der Ansprüche 1 bis 4, **dadurch gekennzeichnet, daß** als Füllstoffe anorganische Verbindungen mit geringer Farbkraft, Kieselerde, Silikate, Calciumcarbonat und Calciumsulfat eingesetzt werden.

6. Verfahren nach einem oder mehreren der Ansprüche 1 bis 5, **dadurch gekennzeichnet, daß** die Granulierung durch Sprühtrocknung, Aufbaugranulation, insbesondere Teller- oder Trommelgranulation, Wirbelschichtverfahren, Mischerverfahren, Pastenverformung mit Nachtrocknung, Preßoder Kompaktierverfahren mit Nachtrocknung oder durch Kombination dieser Verfahrensschritte, durchgeführt wird.

## Claims

1. A process for producing inorganic pigment granules and inorganic filler granules which consist of one or more pigments or fillers and one or more inorganic binders, which have a water content of not more than 5 % by weight, and the particle diameter of which is between 100 µm and 2 mm, **characterised in that** a salt is added as a binder to an aqueous suspension of pigment or filler, and an organic or metallo-organic liquefying agent is added in addition, and this suspension is subsequently converted into granules, wherein the organic liquefying agent or the organic fraction in the metallo-organic liquefying agent is thermally decomposed without organic residues remaining in the granular material.

2. A process according to claim 1, **characterised in that** inorganic metal salts from the group consisting of borates, carbonates, silicates, sulphates, sulphites, selenates, chlorides, fluorides, phosphates, nitrates and aluminates are used as binders in an amount of 0.01 to 10 % by weight.

3. A process according to claims 1 or 2, **characterised in that** formic acid, tartaric acid, citric acid, oxalic acid and salts or derivatives thereof, polyacrylates, polyaspartic acid, sulphonates, alcoholates or condensation products of formaldehyde with amines are used as liquefying agents in an amount of 0.01 to 10 % by weight.

4. A process according to one or more of claims 1 to 3, **characterised in that** iron oxides, titanium dioxides, chromium oxides, zinc oxide, rutile mixed phase pigments, manganese iron oxides and carbon blacks are used as pigments.

5. A process according to one or more of claims 1 to 4, **characterised in that** inorganic compounds of low colouring strength, silica, silicates, calcium carbonate and calcium sulphate are used as fillers.

6. A process according to one or more of claims 1 to 5, **characterised in that** granulation is effected by spray-drying, agglomerative granulation, particularly pan or drum granulation, fluidised bed processes, combined processes, moulding of pastes with subsequent drying, pressing or compaction processes with subsequent drying, or by a combination of these process steps.

## Revendications

1. Procédé pour la préparation de granulés de pigments inorganiques et de granulés de matières de charge inorganiques consistant en un ou plusieurs pigments ou matières de charge et un ou plusieurs liants inorganiques et ayant une teneur en humidité ne dépassant pas 5 % en poids, avec un diamètre de particule allant de 100 µm à 2 mm, **caractérisé en ce que**, à une suspension aqueuse de pigment ou de matière de charge, on ajoute un sel qui sert de liant et en outre un agent fluidifiant organique ou organométallique puis on met cette suspension à l'état de granulés, l'agent fluidifiant organique ou la partie organique de l'agent fluidifiant organométallique étant décomposé à la chaleur, de sorte que les granulés obtenus ne contiennent pas de résidus organiques.

2. Procédé selon revendication 1, **caractérisé en ce que** l'on utilise en tant que liants des sels métalliques inorganiques du groupe consistant en les borates, les carbonates, les silicates, les sulfates, les sulfites, les sélénates, les chlorures, les fluorures, les phosphates, les nitrates et les aluminates, en quantité de 0,01 à 10 % en poids.

3. Procédé selon la revendication 1 ou 2, **caractérisé en ce que** l'on utilise en tant qu'agents fluidifiants l'acide formique, l'acide tartrique, l'acide citrique, l'acide oxalique, ou leurs sels ou dérivés, des polyacrylates, l'acide polyaspartique, des sulfonates, des alcoolates, des produits de condensation du formaldéhyde et d'aminés, en quantité de 0,01 à 10 % en poids.

4. Procédé selon une ou plusieurs des revendications 1 à 3, **caractérisé en ce que** les pigments mis en oeuvre sont des oxydes de fer, des dioxydes de titane, des oxydes de chrome, l'oxyde de zinc, des pigments rutiles à phases mixtes, des oxydes de fer-manganèse et des noirs de carbone.

5. Procédé selon une ou plusieurs des revendications 1 à 4, **caractérisé en ce que** les matières de charge mises en oeuvre sont des matières minérales à faible puissance de coloration, la silice, des silicates, du carbonate de calcium ou du sulfate de calcium.

6. Procédé selon une ou plusieurs des revendications 1 à 5, **caractérisé en ce que** la granulation est réalisée par séchage-atomisation, par accumulation, en particulier sur plateau ou en tambour, par opération en lit tourbillonnaire, opération dans des mélangeurs, empâtage suivi d'un séchage, par des opérations de compression ou de compactage suivies d'un séchage ou par une combinaison de ces diverses techniques.
